# EUROPÄISCHE PATENTSCHRIFT

(11) **EP 0 941 168 B1**
(45) Veröffentlichungstag und Bekanntmachung des Hinweises auf die Patenterteilung: **04.09.2002**
(21) Anmeldenummer: 98956839.9
(22) Anmeldetag: 24.09.1998
(51) Int. Cl.: B60N 2/24

(54) **Variabler Sitz, insbesondere für Verkehrsysteme**
Adjustable seat, especially for transport systems
Siège réglable, notamment pour systèmes de transport

(30) Priorität: 27.09.1997 DE 19742773
(43) Veröffentlichungstag der Anmeldung: 15.09.1999
(73) Patentinhaber: Nicol, Klaus, 60433 Frankfurt am Main (DE)
(72) Erfinder: NICOL, Klaus, D-60433 Frankfurt am Main (DE)
(74) Vertreter: Reichel, Wolfgang, Dipl.-Ing.
(86) Internationale Anmeldenummer: EP9806081
(87) Internationale Veröffentlichungsnummer: WO99016638

(56) Entgegenhaltungen:
- WO-A-95/11656
- CH-A- 663 764
- US-A- 2 976 868
- US-A- 3 578 379
- US-A- 3 924 891
- US-A- 4 291 916
- US-A- 4 711 486
- US-A- 5 214 360

## Beschreibung

Die Erfindung betrifft einen variablen Sitz. Sie betrifft insbesondere einen Sitz für Verkehrssysteme mit einer nach hinten kippbaren Sitzfläche und einer kippbaren Lehnenfläche, einem nicht variablen Untergestell, einem Widerlager für die Füße und einer Einrichtung zum Verstellen des Sitzes (s. zum Beispiel US-A-4 291 916).

An Sitze werden die Anforderungen gestellt, daß sie ergonomisch, komfortabel, ökonomisch herzustellen und sicher sind. Man versucht diese Anforderungen dadurch zu erfüllen, daß Untergestell, Sitzfläche, Lehnenfläche, Fußraste und Einrichtungen zum Verstellen dieser Elemente in den mannigfaltigsten Formen vorgesehen werden oder daß diese Elemente auch fortgelassen werden. Da a) zwischen den Elementen untereinander, b) den Anforderungen untereinander und c) den Elementen und den Anforderungen ein komplexes Geflecht von Beziehungen besteht, ist es schwierig, die Erfüllung der Anforderungen zu optimieren. Demzufolge werden dem Benutzer häufig Sitze angeboten, die in Bezug auf seine individuellen Bedürfnisse in hohem Maße verbesserungsbedürftig sind. Dies betrifft insbesondere Situationen, in denen es nicht möglich ist, Sitzpausen einzulegen und in denen mehrere Benutzer mit unterschiedlichen Voraussetzungen und Bedürfnissen den gleichen Sitz mit unterschiedlicher Aufgabenstellung benutzen. Hier ist zu bemängeln,
a)daß es nur mit Mühe möglich ist, Aufgaben wie Schreiben, Lesen, Essen oder Schlafen nachzukommen,
b)daß man sich hierbei unkomfortabel fühlt, was durch zu hohe Hautbelastung, Zirkulationsstörungen, unphysiologische Form der Wirbelsäule, zu enge oder zu geringe Kopplung mit dem Nachbarn etc. bedingt ist,
c)daß die Mängel a) und b) durch einstellbare Sitze mit vielen Freiheitsgraden zwar reduziert werden können, daß dies aber hohen konstruktiven Aufwand, Störungsanfälligkeit und Probleme mit der Bedienung zur Folge hat,
d)daß Sitze mit vielen Freiheitsgraden häufig sicherheitstechnische Mängel aufweisen, was insbesondere bei Sitzen in Verkehrssystemen wie Flugzeugen kritisch ist.

Die Erfindung befaßt sich mit der Aufgabe, Sitze unter den genannten Kriterien zu optimieren, wobei der Schwerpunkt in der Anwendung in Verkehrsmitteln liegt. Dabei steht der Komfort im Vordergrund, da die beengten Verhältnisse nur wenige Sitzpausen oder auch nur Änderungen der Sitzposition zulassen. Der Komfort kann insbesondere beim Ruhen dadurch wesentlich erhöht werden, daß die Sitzfläche nach hinten gekippt wird. Hierdurch wird vermieden, daß bei schräg gestellter Rückenlehne der Körper bestrebt ist, nach vorn/unten zu rutschen, was nur durch große Reibung sowohl zwischen der Sitzfläche und der Kleidung als auch zwischen der Kleidung und der Haut vermieden werden kann. Diese Reibung ist z. B. nicht gegeben bei glatten Sitzflächen, wie z. B. solchen aus Holz oder aus nicht speziell ausgerüstetem Leder. Ist die Reibung zur Sitzfläche gegeben, so führt die Reibung zwischen Kleidern und Haut zu einer Scherspannungsbelastung der Haut, die als eine der Hauptgründe für geringen Sitzkomfort anzusehen ist. Steigt dagegen die Sitzfläche nach vorne an, so kompensieren sich die nach vorne drückende Rumpfmasse und die nach hinten drückende Masse der Oberschenkel und eines Teils der Masse von Unterschenkel und Fuß teilweise, so daß sich die durch Reibung aufzubringende Reaktionskraft wesentlich reduziert.

Es sind Konstruktionen mit nach hinten abfallender Sitzfläche bekannt, bei denen die Sitzfläche entweder um eine Achse im vorderen Teil der Sitzfläche nach unten gekippt wird (DE 4222222, DE 3638231) oder auf einem Widerlager gleitet (DE 3822877). Beiden Konstruktionen ist gemein, daß sich der Neigungswinkel der Sitzfläche nur um wenige Grad ändern läßt und daß sich die Vorderkante der Sitzfläche beim Kippen nach oben bewegt und so den Druck gegen die Oberschenkel in unkomfortabler Weise erhöht.

Erfindungsgemäße Aufgabe ist es daher, diese beiden Nachteile zu vermeiden, d.h. einerseits die Sitzfläche um einen vergleichsweise großen Winkel zu kippen und andererseits hierbei den Abstand zwischen der Vorderkante der Sitzfläche und dem Widerlager für die Füße nicht zu vergrößern, um beim Kippen den Sitzkomfort beizubehalten.

Diese neuartige Aufgabe wird auf zwei alternativen Wegen gelöst. Bei der Lösung gem. Anspruch 1 wird die Sitzfläche mit dem Untergestell um eine horizontale Achse im hinteren Bereich der Sitzfläche drehbeweglich verbunden, so daß die Sitzfläche um diese Achse nach hinten gekippt werden kann. Wegen der Vergrößerung des Abstandes zwischen der Kante der Sitzfläche und dem Boden wird zusätzlich eine Fußraste als Widerlager für die Füße angeordnet, so daß die Füße auf der Fußraste abgestellt werden können und gem. der erfindungsgemäßen Aufgabe der Abstand zwischen der Kante der Sitzfläche und dem Widerlager konstant gehalten werden kann.

Bei der Lösung gem. Anspruch 2 ist die Sitzfläche um ein vor der Sitzflächenvorderkante liegendes virtuelles Drehgelenk kippbar, damit senkt sich die Vorderkante beim Kippen ab. Da das Widerlager für den Fuß durch den unbeweglichen Boden oder eine Fußraste gebildet ist, ist somit die erfindungsgemäßen Aufgabe gelöst, den Abstand zwischen der Kante der Sitzfläche und dem Widerlager nicht zu vergrößern.

Spezifiziert man die in Anspruch 1 und 2 genannten allgemeinen Merkmale durch die in den Unteransprüchen genannten Ausführungsformen, so verbessern sich die Qualitätsmerkmale entweder generell oder zumindest in gewissen Anwendungen. Kriterien sind hierbei
- Ergonomie im Sinne universeller Benutzbarkeit, da der Passagier lange Zeit den Sitz benutzt und den Wunsch hat, sowohl zu schreiben als auch zu lesen, essen und zu schlafen
- Sicherheit, da die Sitze vor der Zulassung harte mechanische und brandschutztechnische Tests zu bestehen haben,
- Ökonomie im Sinne von Störungssicherheit, geringem Wartungsaufwand und Preiswürdigkeit eines HiTech-Produktes in mittleren Seriengrößen.

Diese Lösungen gem. den Haupt- und Unteransprüchen weichen teilweise erheblich vom bekannten Stand der Technik ab, teilweise sind sie aus anderen Anwendungen bekannt, erscheinen aber im Zusammenhang mit der Lösung der erfindungsgemäßen Aufgabe widersinning und kontraproduktiv. So erscheint es unter dem Aspekt des Komforts nicht sehr sinnvoll, gem. Anspruch 1 die Sitzfläche um die hintere Kante zu kippen oder gem. Anspruch 7 die Sitzfläche mehr als 55 cm über dem Boden anzuordnen, da seit langem bekannt ist, daß unter diesen Sitzbedingungen das Gewicht der Beine nicht ausreichend durch den Boden abgetragen werden kann, so daß ein hoher Hautdruck an der Vorderkante des Sitzes auftritt, der zu Durchblutungsstörungen und nervalen Irritationen führt. Gleichfalls erscheint es als nicht sehr sinnvoll, gem. Anspruch 20 durch ein Spanntuch ein komfortables Sitzen ermöglichen zu wollen, da von Militärtransportern und einfachsten PKWs der geringe Komfort dieser Technik bekannt ist. Im Folgenden kann aber gezeigt werden, daß mit diesen und weiteren nach der bisherigen allgemeinen Erfahrung wenig vorteilhaft erscheinenden Merkmalen Sitze aufgebaut werden können, die den oben genannten Qualitätskriterien in hohem Maße entsprechen, falls das Gesamt der Merkmale geeignet ausgebildet ist. Hierfür sind im folgenden Beispiele angegeben.

Die Ansprüche ermöglichen die Ausbildung von Sitzen, deren Sitzfläche hochklappbar ist, so daß die Passagiere insbesondere beim Borden im Flugzeug zum Verstauen ihres Handgepäcks vor ihren hochgeklappten Sitz treten können und nicht mehr darauf angewiesen sind, das Verstauen vom Gang aus vorzunehmen und damit den Gang für alle anderen Passagiere zu blockieren. Bei einer Lösung gem. Anspruch 1 ist die Sitzfläche gem. dem Hauptanspruch um den benötigten großen Winkel hochklappbar. Bei Flugzeugsitzen ist zusätzliche Voraussetzung, daß der vordere Querholm der Sitzbank nicht die Bewegungsfreiheit des.

Passagiers reduziert, hierfür sind in den Ansprüchen 5, 6 und 7 Lösungen angegeben. Bei einer Anordnung gem. Anspruch 2 kann der Sitz ebenfalls um die Hinterkante hochgeklappt werden, wenn die Sitzfläche gem. Anspruch 8 um das Führungselement gedreht werden kann, wobei die auf dem Boden aufstehenden Stützen hochgehoben werden. Das Zurücksetzen der Stützen auf den Boden wird erleichtert, wenn gem. Anspruch 8 das untere Ende der Stützen durch Laschen drehgelenkig mit der Führungsvorrichtung verbunden ist, so daß die Stützen beim Herunterklappen der Sitzfläche wieder in ihre Ausgangsstellung zurückgeführt werden.

Bildet man in der Lösung gem. Anspruch 1 das Untergestell derart aus, daß die lichte Höhe unter dem Gestell möglichst hoch wird, so wird dem Wunsch der Passagiere nach einem großen Stauraum unter dem Vordersitz entsprochen. Dieser wird zusätzlich vergrößert, wenn das Untergestell gem. Anspruch 4 bis 7 höher gebaut ist als es der Norm von ca. 45 cm Vorderkantenhöhe entspricht. Hierbei ist weiterhin vorteilhaft, daß auch sehr groß gewachsene Passagiere -und das ist aufgrund der seit Jahrzehnten zu beobachtenden Akzeleration eine zunehmende Gruppe- mit normalem Komfort sitzen können. Den anderen Passagieren und Kindern wird eine erfindungsgemäß standardmäßige vorgesehene Fußraste angeboten.

In der Lösung gem. Anspruch 2 erhält man bei geeigneter Geometrie der Mechanik gem. Anspruch 9 den aus biomechanischer Sicht idealen Fall, daß beim Kippen der Sitzfläche diese um das Kniegelenk des Sitzenden dreht, so daß die Druckverhältnisse am Oberschenkel von der Kippung nicht beeinflußt werden.

Bildet man die Führungsvorrichtung derart aus, daß die Sitzfläche an die Lehnenfläche geklappt werden kann, was z.B. durch eine hinreichende Ausdehnung der Führung nach unten zu erreichen ist, so läßt sich der Sitz in einer Ebene zusammenfalten und platzsparend verstauen.

Gemäß einer Weiterbildung der Erfindung können die Sitze so ausgelegt werden, daß die Sitzfläche um 15° und mehr nach hinten gekippt werden kann. Verbindet man Sitzfläche und Lehne gemäß Anspruch 14 (erste Alternative) fest miteinander, so vereinfacht sich die Konstruktion und der Bedienvorgang. Der Nachteil, die Lehne nicht stärker neigen zu können als die Sitzfläche, ist bei Fluggastsitzen der Touristenklasse gering einzuschätzen, da hier der Neigungswinkel der Lehne aus Platzgründen sehr limitiert ist. Verbindet man dagegen Sitzfläche und Rückenlehne gemäß Anspruch 14 (zweite Alternative) drehbar miteinander, so kann der Hüftwinkel vergrößert werden, was den Sitzkomfort verbessert.

Bildet man die Rückenlehne gemäß den Ansprüchen 15 und 16 als Konstruktion mit Holmen und getrennt kippbarer Lehnenfläche aus und bildet man die Holme gemäß Anspruch 16 so aus, daß sie auch nach vorn geneigt werden können, so kann die Sitztiefe in hohem Maße variiert werden. Dies ist insbesondere im internationalen Verkehr notwendig, um auch klein gewachsenen Asiatinnen und Kindern die Möglichkeit zu geben, das Becken gegen die Lehnenfläche abzustützen. In Kombination mit einer in weiten Bereichen einstellbaren Fußraste kann so der Sitz in einer großen Spannbreite den anthropometrischen Maßen der Passagiere angepaßt werden. Ordnet man zudem am unteren Teil der Holme zwischen diesen eine Platte an, so wird verhindert, daß a) der hintere Passagier bei schräger Lehnenfläche Gegenstände auf dem jetzt freien hinteren Teil der Sitzfläche abstellt und b) daß er mit seinen Knien durch das Spanntuch auf den Rücken des vorderen Passagiers drückt.

Bildet man die Polsterung gemäß den Ansprüchen 17 bis 19 in unterschiedlichen Härten aus, so kann den biomechanischen Anforderungen besser entsprochen werden als bei der konventionellen Benutzung einheitlicher Härten. Insbesondere kann die Sitzfläche in mittlerer Härte ausgelegt werden, um die Sitzbeinhöcker zwar ausreichend, aber nicht bis zum harten Widerlager einsinken zu lassen. Die Polsterung im Becken kann hart ausgebildet werden, um das Becken vor dem Abkippen nach hinten zu bewahren und so eine unphysiologische Belastung der Bandscheiben der unteren Lendenwirbelsäule zu vermeiden. Die Polsterung im Lendenbereich kann eine mittlere Härte aufweisen, um sich der unterschiedlich ausgeprägten Lordose der Lendenwirbelsäule anpassen zu können, während der obere Rumpfbereich aus Komfortgründen weich gepolstert sein kann.

Bildet man die Polsterung gemäß Anspruch 20 als Spanntuch mit anisotropem Elastizitäts-Koeffizienten aus, so lassen sich die Anforderungen gemäß den Ansprüchen 17 bis 19 ebenfalls erfüllen und so ein wirbelsäulengesundes und komfortables Sitzen ermöglichen. Gegenüber einer Schaumstoffpolsterung ergeben sich die folgenden Vorteile:
- Besserer Wärme- und Feuchte-Transport durch Wegfall der Sperrschicht Schaumstoff
- Geringe Brandgefahr durch Ersatz der dicken, häufig brennbaren Schaumstoffschicht durch ein dünnes, nicht brennbares Tuch
- Gewichts- und möglicherweise Kosten-Ersparnis
- Geringere Volumina, was bei einer Ausbildung der Sitze als Faltsitze von Bedeutung ist.

Zu beachten ist hierbei, daß das Spanntuch senkrecht zur Körperlängsachse gespannt wird und nicht wie bei einem Liegestuhl in der Körperlängsachse, da sich bei senkrechter Spannung die komfortvermindernden Kopplungen durch den Hängematteneffekt nur seitlich auswirken, so daß Sitzfläche und Rückenlehne in Körperlängsrichtung die für den Komfort benötigten Profile und unterschiedlichen Druckzonen ausbilden können.

Verbindet man diese Fußraste gemäß den Ansprüchen 21 bis 27 mit ein oder zwei blockierbaren Hebelsystemen mit Drehgelenken, so läßt sich die Fußraste an nahezu jedem Punkt des Fußraumes zum Ablegen der Füße blockieren, so daß für nahezu jeden Körperbau die ideale Fußposition eingenommen werden kann. Befestigt man das Hebelsystem der Fußraste gemäß Anspruch 24 an der Sitzfläche, so bewegt sich die Raste beim Hochkippen der Sitzfläche mit und die gewählte Einstellung der Fußraste bleibt erhalten. Befestigt man das Hebelsystem der Fußraste dagegen am Untergestell, so kann man die Raste beim Nachhintenkippen als Widerlager für die Füße einsetzen.

Verbindet man gemäß Anspruch 21 eine Einrichtung zum Verstellen mit mehreren Gelenken (oder verbindet man im Extremfall gemäß Anspruch 22 eine Einrichtung zum Verstellen mit allen Gelenken), so wird die Bedienung der Freiheitsgrade sehr einfach. So wird ein großes Problem gelöst, das in der Anpassung von Sitzen an den jeweiligen Benutzer besteht. Ist der Sitz nur für eine Person einzustellen, so kann (z.B. bei vielfach verstellbaren Autositzen) die einmal gefundene optimale Einstellung konstant bleiben; bei einigen wenigen, bekannten Benutzern versucht man dort das Problem durch Memorycards zu lösen. In öffentlichen Verkehrsmitteln, einschließlich Flugzeugen, scheiden diese Lösungen jedoch aus; hinzu kommt, daß hier die Passagiere teilweise nicht Willens oder in der Lage sind, Bedienungsanweisungen zum Einstellen zu lesen und umzusetzen. Daher wird erfindungsgemäß das extrem einfache und intuitiv erfaßbare Verfahren realisiert: "Bedienhebel ziehen, bequem zurechtsetzen, Hebel zurück": Dies wird dadurch ermöglicht, daß durch das Ziehen der (einzigen) Vorrichtungen zum manuellen Betätigen, die vorzugsweise in der Form eines Bedienhebels ausgebildet ist, alle verstellbaren Elemente frei werden. Dadurch kann der Benutzer die Elemente, ohne sie selbst noch ihre Funktion und Bewegungsmöglichkeiten zu kennen und zu verstehen, durch Muskelkraft zurückdrücken, während sie seinem nachgebenden Körper durch Feder- oder Schwerkraft folgen. Insbesondere wird so
- bei einer gemäß Anspruch 14 (erste Alternative) festen Verbindung von Sitzfläche und Lehne beim Zurücklehnen des Oberkörpers die Lehnenfläche zurückgekippt und die Sitzfläche vorn hochgekippt und beim Vorlehnen des Oberkörpers die Lehne vor- und der Sitz heruntergekippt,
- bei einer gem. Anspruch 15 drehbar an den Holmen befestigten Lehnenfläche bei Vorrutschen des Beckens auf der Sitzfläche und beim Zurücklehnen des Oberkörpers die Sitzfläche für kleingewachsene Passagiere verkleinert, während sie bei umgekehrter Bewegungsrichtung für großgewachsene Passagiere vergrößert wird,
- bei einer gemäß Anspruch 23 durch mindestens zwei frei drehbare Hebel mit dem Sitz verbundenen Fußraste diese durch einen Fuß ergriffen und an nahe zu jeden Punkt des Fußraumes verfahren,
- die Konstruktion besonders einfach, wenn bei einer Massenverteilung Lehnenholme, Lehnenfläche und Sitzfläche ohne Beteiligung von Federn in die vertikale bzw. horizontale Ausgangsposition zurückkehren.

Anschließend sollen zwei Funktionen zusammenhängend beschrieben werden, die durch das Zusammenwirken mehrere Ansprüche realisiert werden, nämlich der Kindersitz und die Arbeitsweise der Fußraste.

Im Gegensatz zu Erwachsenden verfügen Kinder in allen öffentlichen Verkehrsmitteln über keine Sitze, die in Bezug auf Ergonomie, Komfort und Sicherheit ihrem Körperbau angepaßt sind. Für Flugzeuge wurden vielfach Vorschläge gemacht, die meist auf spezielle Einbauten in Erwachsenensitze oder auf eigene Kindersitze hinauslaufen, die alle gravierende Mängel aufweisen. Dagegen wird erfindungsgemäß ein Kindersitz lediglich durch eine kindgemäße Einstellung des standardmäßigen Sitzes für Erwachsene realisiert. Hier werden lediglich
- die Lehnenholme nach vorne gekippt, wobei die Lehnenfläche in der Vertikalen verbleiben kann, so daß die Sitztiefe bis auf ca. die Hälfte reduziert wird
- die Fußraste bei Bedarf bis an die Sitzkante hochgezogen, so daß die Füße in jeder gewünschten Position aufgestellt werden können.

Die Arbeitsabläufe der Fußraste sind die folgenden. Beim Einnehmen des Sitzes ist die Raste in der Ruhestellung an oder unter dem Sitz blockiert. Beim Ziehen des Bedienhebels werden zuerst die beiden Drehgelenke oder Drehgelenkpaare freigegeben, dadurch wird durch weiteres Ziehen der obere Hebel des Fußrastersystems gegen die Wirkung der Rückholfeder nach unten gedrückt und so der untere Hebel mit der Fußraste auf dem Widerlager nach vorne geschoben, wo sie in der Startstellung gemäß Anspruch 26 in einer Höhe von 5 - 10 cm über dem Boden zur Ruhe kommt. Dadurch gelangt die Fußraste in das Blickfeld des Passagiers, der sie mit dem Fuß ergreift und in die gewünschte Arbeitsposition verschiebt. Dann legt er den Bedienhebel zurück, wodurch beide Gelenke blockiert werden und legt die Füße auf die jetzt blockierte Fußraste. Verläßt er seinen Sitz, zieht er den Bedienhebel hoch, wodurch alle Gelenke freigegeben werden und alle beweglichen Elemente in die Ruheposition zurückkehren. Unter anderen gibt das Hebelsystem der Fußraste auf diese Weise nach, die Raste gleitet auf den Boden und wird von dort durch die Rückholfeder über die Startposition in die Ruheposition an oder unter dem Sitz gezogen.

Im folgenden wird die Erfindung beispielhaft anhand der beiliegenden Zeichnungen beschrieben.

Es zeigen
Fig. 1 eine Einstellung, in der sich alle beweglichen Elemente in der Ruheposition befinden,
Fig. 1a die in Fig. 1 gezeigte Ausführungsform in der Frontalsicht,
Fig. 2 die Einstellung, die ein Erwachsener vorgenommen hat, um zu ruhen,
Fig. 3 eine Ausführungsform, bei der die Holme nach vorn geneigt werden können in eine Einstellung als Kindersitz,
Fig. 4 eine Ausführungsform, bei der die Sitzfläche unabhängig von den Holmen hochgeklappt werden kann,
Fig. 5 eine Ausführungsform, in der der Querholm Q1 fortgelassen ist und das vordere Bein des Sitzes direkt mit dem hinteren Querholm Q2 verbunden ist,
   und
Fig. 6 eine alternative Ausführungsform zu Fig. 5, in der der Querholm Q1 zur Verstärkung von Q2 auf den Boden abgesenkt ist,
Fig. 6a die in Fig. 6 gezeigte Ausführungsform in der Frontalsicht, und
die Figuren 7 bis 10 eine Ausführungsform des Sitzes in verschiedenen Einstellungen.

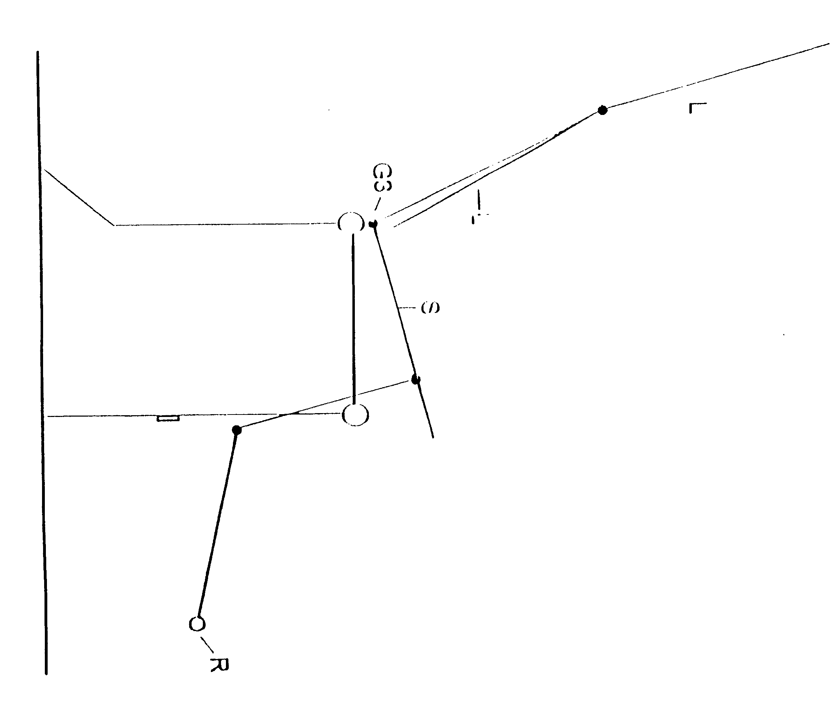

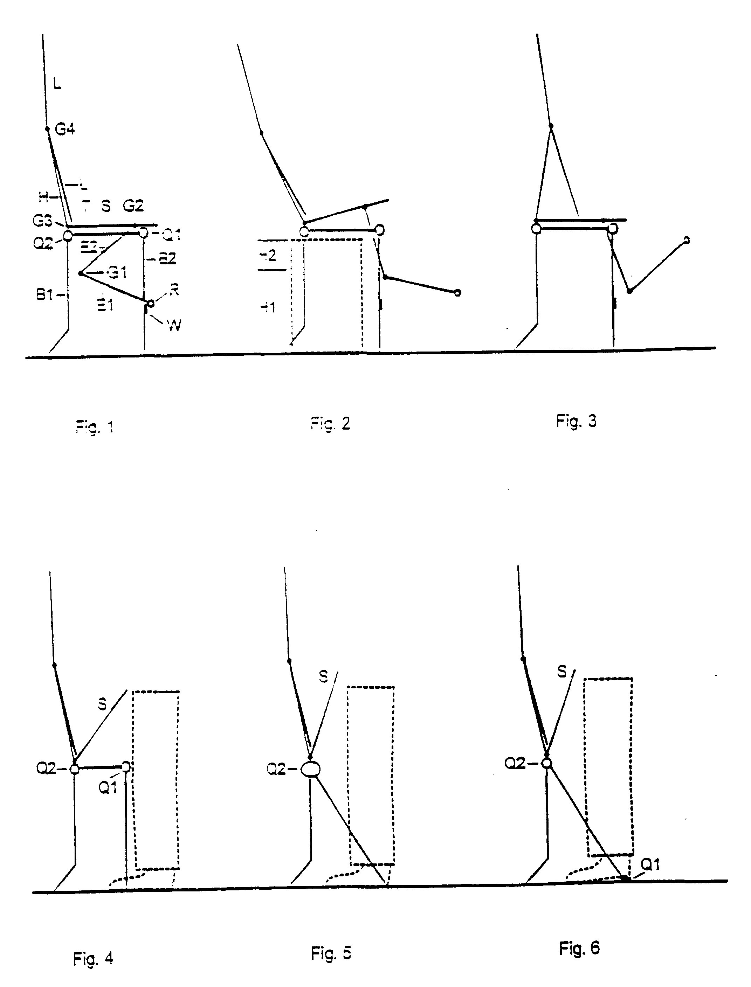

Die Figuren 1 bis 6 zeigen den Sitz gem. Anspruch 1 in verschiedenen Ausführungsformen und Einstellungen. In Fig. 1 sind alle beweglichen Elemente in der Ruheposition, in der der Passagier den Sitz beim Einnehmen des Platzes antrifft. Die Sitzfläche S ist waagerecht, die Holme H und die Lehnenfläche L nahezu senkrecht. Die Fußraste R liegt auf dem Widerlager W auf, sie ist durch den fußrastennahen Hebel E1 und den fußrastenfernen Hebel E2 mit der Sitzfläche verbunden. Die Gelenke G1 bis G4 sind blockiert. Q1 und Q2 bezeichnen Querholme, die z. B. in Flugzeugsitzen auf zwei Beinen B1 und B2 aufliegen und z. B. drei Einzelsitze tragen; Q1, Q2, B1, B2 sowie die Traverse T bilden das Untergestell. Fig. 1a zeigt eine Sitzbank aus einem Flugzeug mit drei solchen Einzelsitzen in der Frontalansicht. Im Boden sind Schienen N zur Befestigung der Beine verlegt, deren Lage fest vorgegeben ist. Der mögliche Wechsel zwischen Zweier- und Dreierbänken bedingt einen asymmetrischen Aufbau der Bank und ein starkes Auskragen, wie dies in Fig. 1a auf der rechten Seite gezeigt ist. Die Figuren 1 und 1a zeigen ebenfalls die beiden Hebel der Fußraste E1 und E2, die horizontal verlaufende Raste R sowie das Widerlager W. Weiterhin sind die Achse oder das Gelenk G3 dargestellt, um das die Sitzfläche S und die Holme H drehen sowie das Gelenk G4 zur Drehung der Lehnenfläche L gegenüber den Holmen.

Fig. 2 zeigt die Einstellung, die ein Erwachsener vorgenommen hat, um zu ruhen. Er hat sich bei hochgezogenem Bedienhebel zurückgelegt, dadurch kippten die Holme und die Lehnenfläche nach hinten, die mit den Holmen fest verbundene Sitzfläche kippte vorne hoch, die Fußraste schob sich in Startposition. Danach zog der Passagier die Fußraste in die in Fig. 2 gezeigte Arbeitsposition und blockierte Holmen, Lehnenfläche, Sitzfläche und die Hebel der Fußraste durch Zurücklegen des Bedienhebels in der in Fig. 2 gezeigten Position. Unter dem Sitz wird ein Gepäckstück gezeigt, das um H2 höher sein kann als Gepäckstücke der Höhe H1, die unter konventionellen Sitzen verstaut werden können.

Fig. 3 zeigt eine Ausführung, bei der die Holme nach vorn geneigt werden können in eine Einstellung als Kindersitz. Zusätzlich ist der obere Teil der Lehnenfläche nach hinten geneigt, so daß sich die Sitztiefe auf ca. die Hälfte reduziert hat. Die Fußraste ist stark heraufgezogen, so daß insgesamt ein Sitz entstanden ist, der den Maßen eines Kleinkindes entspricht.

Fig. 4 zeigt eine Ausführung, bei der die Sitzfläche unabhängig von den Holmen hochgeklappt werden kann, damit der Passagier die Vorbereitungen zum Einnehmen seines Sitzes vor seinem Sitz vornehmen kann und nicht mehr wie bei konventionellen Sitzen gezwungen ist, dies vom Gang aus zu tun und so den Durchgang für die anderen Passagiere zu blockieren. Die Figur zeigt die hochgeklappte Sitzfläche S und ein Bein des nahe an den Sitz herangetretenen Passagiers, das neben den Beinen des Sitzes aufgesetzt wurde. Bei dieser Anordnung ist es bei nicht zu engem Sitzabstand sogar möglich, daß ein zweiter Passagier an dem gezeichneten Ersten vorbei geht. Die Vorteile des hochgeklappten Sitzes können allerdings nur erreicht werden, wenn die beiden Querholme Q1 und Q2 des Untergestells enger zusammenliegen als dies in den Figuren 1 bis 3 und bei den konventionellen Flugzeugsitzen der Fall ist.

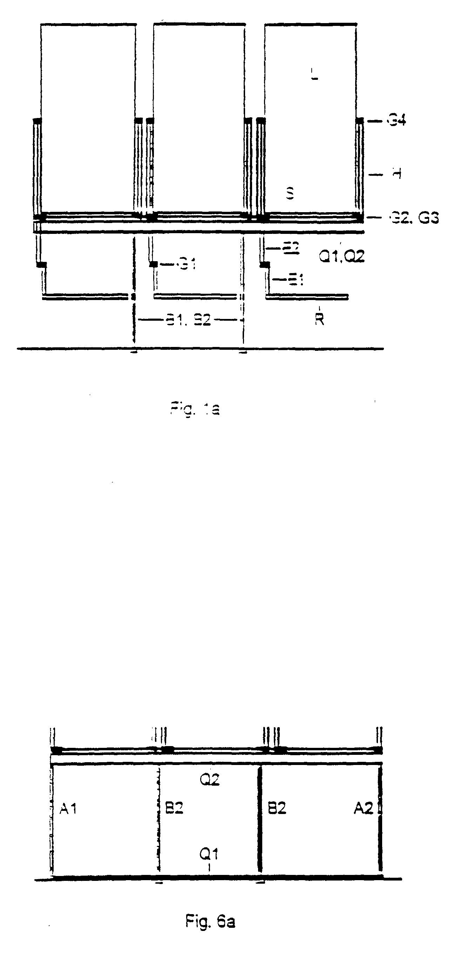

In Fig. 5 und Fig. 6 ist die Option des Hochklappens des Sitzes noch stärker berücksichtigt. In Fig. 5 ist der störende Querholm Q1 fortgelassen und das vordere Bein des Sitzes direkt mit dem hinteren Querholm Q2 verbunden, so daß der Passagier sehr weit in den Sitz hinein treten kann. Aus Gründen der Crash-Sicherheit muß allerdings der verbleibende Holm Q2 verstärkt werden, was in Fig. 5 durch einen vergrößerten Querschnitt dargestellt ist.

Fig. 6 zeigt eine Alternative zur Verstärkung von Q2. Der Querholm Q1 wird beibehalten, er wird aber auf den Boden abgesenkt. Fig. 6a zeigt die Anordnung in der Frontalsicht. Zusammen mit den beiden Vorderbeinen B2 und den Abschlußholmen A1 und A2 bilden Q1 und Q2 einen belastbaren Rahmen, der bei einem Crash die großen, teils über die Sicherheitsgurte der Passagiere auf Q2 eingeleiteten Verzögerungskräfte sicher auf die Schienen N ableitet. Bezüglich des Ausweichens der Passagiere beim Boarden zeigt Fig. 6, daß der erste Passagier auf oder ggf. hinter den unteren Querholm Q1 treten kann, um einen zweiten Passagier vorbeigehen zu lassen.

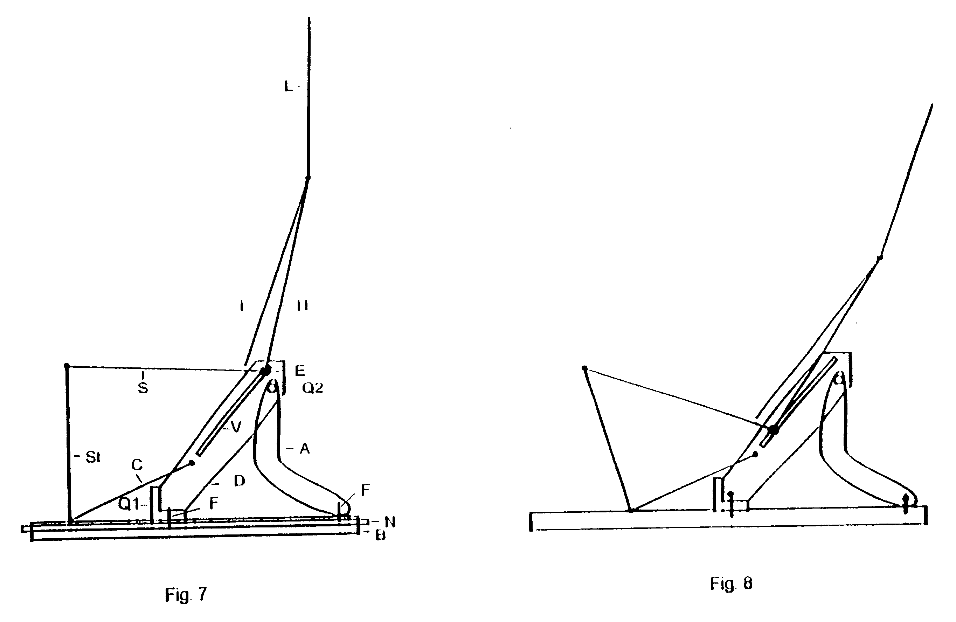

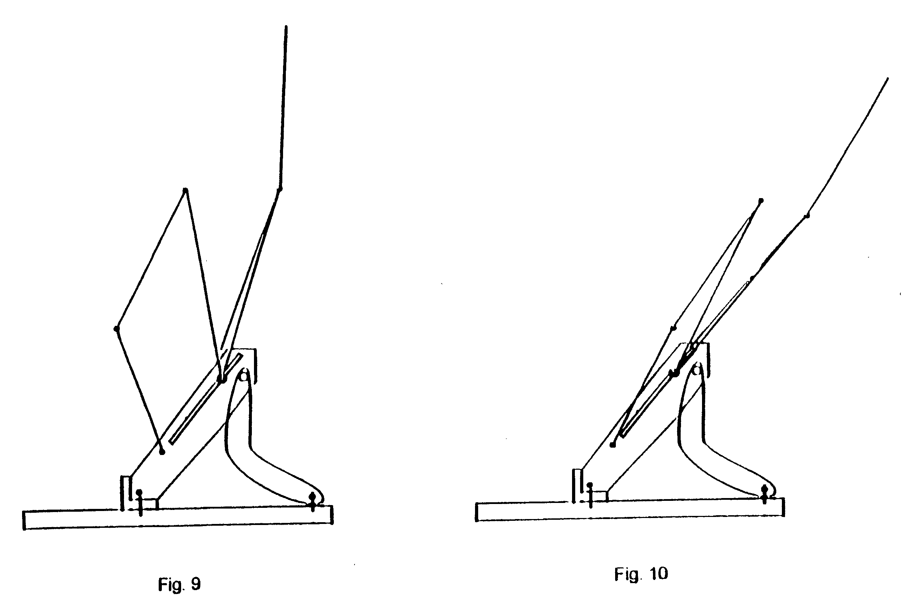

Die Figuren 7 bis 10 zeigen den Sitz gem. Anspruch 2 in verschiedenen Einstellungen: Fig. 7 in Arbeitsstellung, Fig. 8 in Ruhestellung, Fig. 9 in Klappstellung und Fig. 10 in Faltstellung. Fig. 7 zeigt den Boden B, in den für eine Sitzbank zwei Schienen eingelassen sind, von denen eine Scheine N gezeigt wird. Ein Querholm Q1 ist durch Befestigungseinrichtungen F mit beiden Schienen verbunden. Strukturen A, die im Fall eines Crash Energie aufnehmen, verbinden die Schienen mit dem Querholm Q2. Ständer D, die beidseits der Sitze angeordnet sind, verbinden die Querholme und vervollständigen die tragende Struktur N, Q1, D, Q2, A.

An der tragenden Struktur sind die Einzelsitze montiert. Die Führungsvorrichtung V ist auf den Ständer montiert. In ihr gleitet und dreht sich das Führungselement E, das mit der Sitzfläche S verbunden ist. Diese ist an der Vorderkante durch die Stützen St abgestützt, das untere Ende der Stütze St steht auf dem Boden auf, ohne auf diesem befestigt zu sein; die Führung des unteren Endes der Stütze St wird vielmehr durch die Laschen C geleistet, die am Ständer D befestigt sind. Diese Komponenten sind alle durch Drehgelenke verbunden, was durch Kreisflächen gekennzeichnet ist. Das Führungselement E ist weiterhin mit den Holmen H verbunden, die ihrerseits die gebogene Lehnenfläche L tragen. Ein Sitz besteht aus einer Sitzfläche S und einer Lehnenfläche L sowie jeweils zwei Ständern St, Führungsvorrichtungen V, Führungselementen E, Laschen C, Stützen St und Holmen H.

In Fig. 8 ist das Führungselement in der Führungsvorrichtung nach unten geglitten. Die Hinterkante der Sitzfläche hat sich stark, die Vorderkante durch das Schrägstellen der Stützen etwas abgesenkt, was zu einer starken Schrägstellung der Sitzfläche geführt hat. In Fig. 8 hat der Winkel zwischen der Sitzfläche und den Holmen den gleichen Betrag wie in Fig. 7, sind jedoch gemäß Anspruch 14 (zweite Alternative) Sitzfläche und Rückenlehne drehbar miteinander verbunden, so können die Holme und damit die Lehnenfläche auch weiter nach hinten geneigt werden.

In Fig. 9 wurde die Sitzfläche um das Führungselement gedreht, die mit der Sitzfläche verbundenen Stützen und Laschen wurden damit ebenfalls hochgeklappt. Da im Gegensatz zu Fig. 1 bis 3 der vordere Querholm hier auf dem Boden verlegt ist, kann der Passagier beim Boarden vor seinen hochgeklappten Sitz treten und darüber hinaus einen zweiten Passagier vorbeilassen, was den Vorgang des Boardens erheblich beschleunigt.

In Fig. 10 wurden Sitzfläche, Stützen, Laschen und Holme in die Ebene des Ständers gedreht. Nimmt man zusätzlich Ständer und die Energie aufnehmende Struktur aus der Verankerung, was bei Verwendung von marktüblichen Quick Release-Verbindungen als Befestigungseinrichtungen wenig Aufwand bereitet, so kann der Sitz herausgenommen und platzsparend an Bord oder im Magazin gelagert werden. Alternativ kann er auch in die Vertikale gedreht und bei gemischtem Verkehr Waren wie Postsäcke zwischen den zusammengefalteten Sitzen transportiert werden.

## Patentansprüche

1. Sitz, insbesondere für Verkehrssysteme, mit einer nach hinten kippbaren Sitzfläche (S) und einer kippbaren Lehnenfläche (L), einem nicht variablen Untergestell, einem Widerlager für die Füße und einer Einrichtung zum Verstellen des Sitzes,
**dadurch gekennzeichnet,**
**daß** die Sitzfläche (S) mit dem Untergestell um eine horizontale Achse (G3) im hinteren Bereich der Sitzfläche (S) drehbeweglich verbunden ist und
**daß** am Sitz eine Fußraste (R) als Widerlager angeordnet ist.

2. Sitz, insbesondere für Verkehrssysteme, mit einer nach hinten kippbaren Sitzfläche (S) und einer kippbaren Lehnenfläche (L), einem nicht variablen Untergestell, einem Widerlager für die Füße und einer Einrichtung zum Verstellen des Sitzes,
**dadurch gekennzeichnet,**
**daß** die Sitzfläche (S) um ein vor der Vorderkante der Sitzfläche (S) liegendes virtuelles Drehgelenk kippbar ist und
**daß** das Widerlager für die Füße durch den unbeweglichen Boden (B) oder eine Fußraste (R) gebildet ist.

3. Sitz nach Anspruch 1,
**dadurch gekennzeichnet,**
**daß** die Entfernung der Achse (G3) von der hinteren Kante der Sitzfläche (S) kleiner ist als 10 cm.

4. Sitz nach Anspruch 1 oder 3,
**dadurch gekennzeichnet,**
**daß** die Oberkante der Sitzfläche (S) mehr als 55 cm über dem Fußbodenniveau liegt.

5. Sitz nach einem der Ansprüche 1, 3 oder 4,
**dadurch gekennzeichnet,**
**daß** das Untergestell zwei Querholme (Q1) und (Q2) enthält, die weitere Sitze tragen und daß die Mitten der Holme einen Abstand von weniger als 30 cm aufweisen.

6. Sitz nach Anspruch 1, 3, 4 oder 5,
**dadurch gekennzeichnet,**
**daß** das Untergestell zwei Querholme (Q1) und (Q2) enthält, die weitere Sitze tragen und daß der vordere Querholm (Q1) in weniger als 10 cm Höhe über dem Boden angeordnet ist.

7. Sitz nach Anspruch 1, 3, 4 oder 5,
**dadurch gekennzeichnet,**
**daß** das Untergestell einen Querholm enthält, der weitere Sitze trägt.

8. Sitz nach Anspruch 2,
**dadurch gekennzeichnet,**
**daß** im vorderen Bereich der Sitzfläche (S) zwei Stützen vorgesehen sind, die bei horizontaler Sitzfläche (S) senkrecht zum Fußboden verlaufen, die mit einem Ende drehbeweglich auf dem Fußboden aufstehen und die mit dem anderen Ende drehbeweglich mit der Sitzfläche (S) verbunden sind,
**daß** das untere Ende der Stützen durch Laschen (C) drehgelenkig mit einem Ständer (D) verbunden ist,
**daß** im hinteren Bereich der Sitzfläche (S) eine unter einem vorgegebenen Winkel zum Fußboden angeordnete Führungsvorrichtung (V) vorgesehen ist, und daß in der Führungsvorrichtung (V) ein mit dem hinteren Teil der Sitzfläche (S) mechanisch verbundenes Führungselement (E) derart verschiebbar und drehbar angeordnet ist, daß bei einer Verschiebung des Führungselements (E) in der Führungsvorrichtung aus einer oberen Position bei horizontaler Sitzfläche (S) in eine untere Position die Hinterkante der Sitzfläche (S) nach unten gleitet, die Stützen (St) sich neigen, und daß die Vorderkante und die Hinterkante sich zur Erzielung einer nach hinten abfallenden Sitzfläche (S) ungleich absenken.

9. Sitz nach Anspruch 8,
**dadurch gekennzeichnet,**
**daß** die Stützen, die Führungsvorrichtung (V) und der Abstand der Verbindungen der Stützen (St) und der Führungselemente (E) mit der Sitzfläche (S) so dimensioniert sind, daß die Sitzfläche (S) beim Kippen sich um das Kniegelenk des Benutzers dreht.

10. Sitz nach einem der Ansprüche 8 oder 9,
**dadurch gekennzeichnet,**
**daß** das Untergestell u.a. aus Strukturen (A), die im Falle eines Crash Energie aufnehmen, und dem Ständer (D) gebildet wird, der vom Boden (B) aus schräg nach hinten verläuft und der die Führungsvorrichtung (V) trägt.

11. Sitz nach einem der Ansprüche 8 oder 10,
**dadurch gekennzeichnet,**
**daß** die Führungsvorrichtung (V) derart ausgebildet ist, daß die Sitzfläche (S) an die Lehnenfläche (L) geklappt werden kann.

12. Sitz nach Anspruch 2 in Abhängigkeit von einem der Ansprüche 8 bis 11,
**dadurch gekennzeichnet,**
**daß** die Untergestelle mehrerer nebeneinander angeordneter Sitze durch Strukturen miteinander verbunden sind, daß eine Struktur mit dem unteren Ende der Ständer (D) verbunden ist und auf dem Boden aufliegt, daß eine andere Struktur mit dem oberen Ende der Ständer (D) verbunden ist,
**daß** die untere Struktur mit im Boden eingelassenen Befestigungsschienen (N) verbunden ist und
**daß** eine Struktur (A), die im Falle eines Crash Energie aufnimmt, zwischen der oberen Struktur und den Befestigungsschienen (N) angeordnet ist.

13. Sitz nach einem der vorhergehenden Ansprüche,
**dadurch gekennzeichnet,**
**daß** die Sitzfläche (S) um mindestens 15° nach hinten kippbar ist.

14. Sitz nach einem der vorhergehenden Ansprüche,
**dadurch gekennzeichnet,**
**daß** die Rückenlehne fest mit der Sitzfläche (S) verbunden ist oder
**daß** die Sitzfläche (S) und die Rückenlehne drehbar miteinander verbunden sind.

15. Sitz nach einem der Ansprüche 2, 8 bis 12 oder nach Anspruch 13 in Abhängigkeit von einem der Ansprüche 2, 8 bis 12,
**dadurch gekennzeichnet,**
**daß** am hinteren Ende der Sitzfläche (S) zwei Holme (H) befestigt sind und
**daß** eine Lehnenfläche (L) angeordnet ist, die drehbar ist um eine horizontale Achse, die vom oberen Ende der Holme und von der Mitte der Lehnenfläche (L) jeweils weniger als 15 cm Entfernung aufweist.

16. Sitz nach Anspruch 15,
**dadurch gekennzeichnet,**
**daß** die Holme (H) sowohl nach vorn als auch nach hinten geneigt werden können.

17. Sitz nach einem der vorhergehenden Ansprüche,
**dadurch gekennzeichnet,**
**daß** die Rückenlehne in vertikaler Richtung unterschiedliche Härten aufweist.

18. Sitz nach Anspruch 17,
**dadurch gekennzeichnet,**
**daß** in vertikaler Richtung von unten nach oben eine Zone I zum Abstützen des Beckenkamms, eine Zone II zum Abstützen der Lendenwirbelsäule und eine Zone III zum Abstützen des oberen Rumpfes vorgesehen sind und
**daß** Zone I und Zone II härter ausgelegt sind als Zone III.

19. Sitz nach Anspruch 18,
**dadurch gekennzeichnet,**
**daß** Zone I härter ausgelegt ist als Zone II und
**daß** Zone I härter ausgelegt ist als die Sitzfläche (S).

20. Sitz nach einem der vorhergehenden Ansprüche,
**dadurch gekennzeichnet,**
**daß** die Polsterung der Rückenlehne oder der Sitzfläche (S) als Spanntuch ausgebildet ist und
**daß** das Spanntuch eine in Ketten- und Schußrichtung unterschiedliche Elastizität aufweist und senkrecht zur Körperlängsachse gespannt ist.

21. Sitz nach einem der vorhergehenden Ansprüche,
**dadurch gekennzeichnet,**
**daß** die Einrichtungen zum Verstellen der Komponenten des Sitzes aus Vorrichtungen zum manuellen Betätigen, zum Übertragen von Bewegungen, zum Blockieren von Gelenken und ggf. aus Federelementen zum Bewegen der verstellbaren Elemente des Sitzes bestehen und daß stets mehrere Gelenke durch eine Vorrichtung zum manuellen Betätigen blockiert werden.

22. Sitz nach Anspruch 21,
**dadurch gekennzeichnet,**
**daß** alle verstellbaren Elemente durch nur eine Vorrichtung zum manuellen Betätigen blockiert werden.

23. Sitz nach einem der vorhergehenden Ansprüche,
**dadurch gekennzeichnet,**
**daß** die Fußraste (R) in der Vertikalen und der Horizontalen verstellbar ist und
**daß** die zweidimensionale Verstellbarkeit der Fußraste (R) dadurch realisiert ist, daß die Fußraste mit einem Hebelsystem verbunden ist, das mindestens zwei Drehgelenke aufweist oder mit zwei Hebelsystemen verbunden ist, von denen jedes mindestens zwei Drehgelenke aufweist und von denen das eine Hebelsystem mit dem linken Ende der Fußraste und das andere Hebelsystem mit dem rechten Ende der Fußraste verbunden ist.

24. Sitz nach Anspruch 23,
**dadurch gekennzeichnet,**
**daß** das mindestens zweigelenkige Hebelsystem bzw. die mindestens zweigelenkigen Hebelsysteme an der Sitzfläche (S) und seitlich vom Benutzer befestigt ist bzw. sind.

25. Sitz nach Anspruch 23,
**dadurch gekennzeichnet,**
**daß** an dem der Sitzfläche (S) zugewandten Drehgelenk eine Feder angeordnet ist, die die Fußraste in dem Fall, daß die Drehgelenke nicht durch die Einrichtung zum Blockieren blockiert sind, in eine Ruhestellung an oder unter den Sitz zieht und
**daß** an mindestens einem der zwei der Sitzflächen (S) zugewandten Drehgelenken eine bzw. jeweils eine Feder angeordnet ist, die die Fußraste in dem Fall, daß die Drehgelenke nicht durch die Einrichtung zum Blockieren blockiert sind, in eine Ruhestellung an oder unter den Sitz zieht oder ziehen.

26. Sitz nach Anspruch 25,
**dadurch gekennzeichnet,**
**daß** der bzw. die der Sitzfläche (S) zugewandte n Hebel mit der Vorrichtung zum manuellen Betätigen verbunden ist bzw. sind und daß der bzw. die Hebel bei Betätigung die Fußraste aus der Ruhestellung in eine Startstellung in den Fußraum vor dem Sitz schiebt bzw. schieben.

27. Sitz nach Anspruch 26,
**dadurch gekennzeichnet,**
**daß** der der Fußraste zugewandte Hebel bzw. die der Fußraste zugewandten Hebel in der Position "Ruhestellung" auf einem Widerlager (W) aufliegt bzw. aufliegen und
**daß** der Befestigungspunkt nach Anspruch 24, die Längen der Hebel nach Anspruch 23 und die Lage des Widerlagers so dimensioniert sind, daß die Fußraste in der Startstellung nach Anspruch 26 eine Höhe von 5 bis 10 cm über dem Boden aufweist.

## Claims

1. Seat, especially for transport systems, with a sitting surface (S) which can be tilted backwards and a tiltable back-rest surface (L), a non-adjustable under-frame, an abutment for the feet and a device for adjusting the seat,
**characterised in that**
the sitting surface (S) is connected to the under-frame so as to rotate about a horizontal axis (G3) in the rear region of the sitting surface (S) and
**in that** a foot rest (R) is arranged at the seat as an abutment.

2. Seat, especially for transport systems, with a sitting surface (S) which can be tilted backwards and a tiltable back-rest surface (L), a non-adjustable under-frame, an abutment for the feet and a device for adjusting the seat,
**characterised in that**
the sitting surface (S) can be tilted about a virtual pivot joint lying in front of the front edge of the sitting surface (S) and
**in that** the abutment for the feet is formed by the fixed base (B) or a foot rest (R).

3. Seat according to claim 1,
**characterised in that**
the distance of the axis (G3) from the rear edge of the sitting surface (S) is smaller than 10 cm.

4. Seat according to claim 1 or 3,
**characterised in that**
the upper edge of the sitting surface (S) lies more than 55 cm above the floor level.

5. Seat according to one of claims 1, 3 or 4,
**characterised in that**
the under-frame contains two crossbars (Q1) and (Q2), which bear additional seats and **in that** the centres of the bars have a spacing of less than 30 cm.

6. Seat according to claim 1, 3, 4 or 5,
**characterised in that**
the under-frame contains two crossbars (Q1) and (Q2) which bear additional seats and **in that** the front crossbar (Q1) is disposed at a height of less than 10 cm above the base.

7. Seat according to claim 1, 3, 4, or 5,
**characterised in that**
the under-frame contains a crossbar which bears additional seats.

8. Seat according to claim 2,
**characterised in that**
in the front region of the sitting surface (S) two supports are provided which, when the sitting surface (S) is horizontal, extend perpendicular to the floor, which stand on the floor with one end so as to rotate and which are connected to the sitting surface (S) with the other end so as to rotate,
**in that** the lower end of the supports is connected to a stand (D) by a pivot joint using link plates (C),
**in that** in the rear region of the sitting surface (S) a guiding device (V) is provided arranged at a predetermined angle to the floor, and **in that** in the guiding device (V) a guiding element (E), which is mechanically connected to the rear portion of the sitting surface (S), is arranged so as to be displaceable and rotatable in such a way that when the guiding element (E) is displaced in the guiding device from an upper position with the sitting surface horizontal (S) into a lower position, the rear edge of the sitting surface (S) slides downward, the supports (St) incline and **in that** the front edge and the rear edge drop down unequally in order to achieve a sitting surface (S) sloping backwards.

9. Seat according to claim 8,
**characterised in that**
the supports, the guiding device (V) and the spacing between the parts connecting the supports (St) and the guiding elements (E) to the sitting surface (S) are of such dimensions that, when the sitting surface (S) tilts, it pivots about the user' s knee joint.

10. Seat according to one of claims 8 or 9,
**characterised in that**
the under-frame is formed, inter alia, from structures (A) which absorb energy in the case of a crash, and the stand (D) which extends obliquely backwards from the base (B) and which bears the guiding device (V).

11. Seat according to one of claims 8 or 10,
**characterised in that**
the guiding device (V) is configured in such a way that the sitting surface (S) can be flapped against the back-rest surface (L).

12. Seat according to claim 2 in dependence on one of claims 8 to 11,
**characterised in that**
the under-frames of a plurality of seats arranged beside one another are connected to each other by structures, **in that** a structure is connected with the lower end of the stands (D) and rests on the base, **in that** another structure is connected to the upper end of the stands (D),
**in that** the lower structure is connected to fastening rails (N) let into the base and
**in that** a structure (A) which absorbs energy in the case of a crash is arranged between the upper structure and the fastening rails (N).

13. Seat according to one of the preceding claims,
**characterised in that**
the sitting surface (S) can be tilted backwards by at least 15°.

14. Seat according to one of the preceding claims,
**characterised in that**
the back-rest is securely connected to the sitting surface (S) or
**in that** the sitting surface (S) and the back-rest are rotatably connected to one another.

15. Seat according to one of claims 2, 8 to 12 or according to claim 13 in dependence on one of claims 2, 8 to 12,
**characterised in that**
two bars (H) are fastened to the rear end of the sitting surface (S) and
**in that** a back-rest surface (L) is disposed which can be rotated about a horizontal axis which is at a distance of less than 15 cm from the upper end of the bars and from the centre of the back-rest surface (L) respectively.

16. Seat according to claim 15,
**characterised in that**
the bars (H) can be inclined both forwards and backwards.

17. Seat according to one of the preceding claims,
**characterised in that**
the back-rest is of differing hardnesses in a vertical direction.

18. Seat according to claim 17,
**characterised in that**
in a vertical direction from bottom to top are provided a Zone I to support the pelvic crest, a Zone II to support the lumbar vertebral column and a Zone III to support the upper trunk and
**in that** Zone I and Zone II are designed harder than Zone III.

19. Seat according to claim 18,
**characterised in that**
Zone I is designed harder than Zone II and
**in that** Zone I is designed harder than the sitting surface (S).

20. Seat according to one of the preceding claims,
**characterised in that**
the upholstery of the back rest or of the sitting surface (S) is configured as a stretch cloth and
**in that** the stretch cloth has differing elasticity in warp and weft directions and is tensioned perpendicular to the longitudinal axis of the body.

21. Seat according to one of the preceding claims,
**characterised in that**
the devices for adjusting the components of the seat comprise devices for manual actuation, for transferring movements, for locking joints and possible also comprise spring elements to move the adjustable elements of the seat, and
**in that** a plurality of joints is constantly locked by a device for manual actuation.

22. Seat according to claim 21,
**characterised in that**
that all the adjustable elements are locked by only one device for manual actuation.

23. Seat according to one of the preceding claims,
**characterised in that**
the foot rest (R) can be adjusted both vertically and horizontally and
**in that** the two-dimensional adjustability of the foot rest (R) is realised by the foot rest being connected to a lever system which has at least two pivot joints, or is connected to two lever systems, each of which has at least two pivot joints and of which the one lever system is connected to the left end of the foot rest and the other lever system to the right end of the foot rest.

24. Seat according to claim 23,
**characterised in that**
the at least two-joint lever system or systems is or are secured to the sitting surface (S) and at the side of the user.

25. Seat according to claim 23,
**characterised in that**
there is arranged on the pivot joint which faces the sitting surface a spring which, in the case where the pivot joints are not locked by the locking device, pulls the foot rest into a rest position at or below the seat and
**in that** a spring is disposed at each or at least one of the two pivot joints facing the sitting surfaces (S), which, in the case where the pivot joints are not locked by the locking device, draws the foot rest into a rest position at or below the seat.

26. Seat according to claim 25,
**characterised in that**
the lever or levers facing the sitting surface (S) is or are connected to the device for manual actuation, and **in that**, when actuated, the lever or levers pushes or push the foot rest out of the rest position into a starting position into the foot space in front of the seat.

27. Seat according to claim 26,
**characterised in that**
the lever or levers facing the foot rest lies or lie in the "rest" position on an abutment (W) and
**in that** the fastening point according to claim 24, the lengths of the levers according to claim 23 and the site of the abutment are of such dimensions, that in the starting position according to claim 26 the foot rest is at a height of 5 to 10 cm above the base.

## Revendications

1. Siège, en particulier pour systèmes de transport, avec une face d'assise (S) susceptible de basculer vers l'arrière et une face de dossier (L) susceptible de basculer, un bâti inférieur non variable, un appui pour les pieds et un dispositif de réglage du siège,
**caractérisé en ce que**
la face d'assise (S) est reliée au bâti inférieur avec une mobilité de rotation autour d'un axe (G3) horizontal, dans la zone arrière de la face d'assise (S), et
**en ce qu'**un repose-pieds (R) est disposé sur le siège, à titre d'appui.

2. Siège, en particulier pour systèmes de transport, avec une face d'assise (S) susceptible de basculer vers l'arrière et une face de dossier (L) susceptible de basculer, un bâti inférieur non variable, un appui pour les pieds et un dispositif de réglage du siège,
**caractérisé en ce que**
la face d'assise (S) est susceptible de basculer autour d'une articulation de rotation virtuelle, placée devant le bord avant de la face d'assise (S), et
**en ce que** l'appui prévu pour les pieds est formé par le plancher (B) non mobile ou bien un repose-pieds (R).

3. Siège selon la revendication 1,
**caractérisé en ce que**
la distance entre l'axe (G3) et le bord arrière de la face d'assise (S) est inférieure à 10 cm.

4. Siège selon la revendication 1 ou 3,
**caractérisé en ce que**
le bord supérieur de la face d'assise (S) est situé à plus de 55 cm au dessus du niveau du plancher.

5. Siège selon l'une des revendications 1, 3 ou 4,
**caractérisé en ce que**
le bâti inférieur contient deux montants transversaux (Q1) et (Q2), qui portent d'autres sièges, et
**en ce que** les centres des montants ont un espacement inférieur à 30 cm.

6. Siège selon la revendication 1, 3, 4 ou 5,
**caractérisé en ce que**
le bâti inférieur contient deux montants transversaux (Q1) et (Q2) portant d'autres sièges, et **en ce que** le montant transversale avant (Q1) est disposé à une distance inférieure à 10 cm au dessus plancher.

7. Siège selon la revendication 1, 3, 4 ou 5,
**caractérisé en ce que**
le bâti inférieur contient un montant transversal, portant d'autres sièges.

8. Siège selon la revendication 2,
**caractérisé en ce que**
dans la zone avant de la face d'assise (S) sont prévus deux soutiens s'étendant perpendiculairement au plancher lorsque la face d'assise (S) est horizontale, s'élevant du plancher par une extrémité mobile en rotation et reliés à la face d'assise (S) par l'autre extrémité, avec une mobilité en rotation,
**en ce que** l'extrémité inférieure des soutiens est reliée à un support (D) avec une articulation de rotation, par des pattes (C),
**en ce que**, dans la zone arrière de la face d'assise (S), est prévu un dispositif de guidage (V), disposé à un angle prédéterminé par rapport au plancher, et **en ce que** dans le dispositif de guidage (V) est disposé, de façon permettant un déplacement et une rotation, un élément de guidage (E), relié mécaniquement à la partie arrière de la face d'assise (S), **en ce que**, en cas de déplacement de l'élément de guidage (E) dans le dispositif de guidage d'une position supérieure, alors que la face d'assise (S) est horizontale, à une position inférieure, le bord arrière de la face d'assise (S) coulisse vers le bas, les soutiens (St) s'inclinent, et **en ce que** le bord avant et le bord arrière descendent de façon différente, pour obtenir une face d'assise (S) inclinée en direction de l'arrière.

9. Siège selon la revendication 8,
**caractérisé en ce que**
les soutiens, le dispositif de guidage (V) et l'espacement des liaisons des soutiens (St) et des éléments de guidage (E) avec la face d'assise (S) sont dimensionnés de manière que la face d'assise (S) tourne autour de l'articulation du genou de l'utilisateur lorsque le basculement se produit.

10. Siège selon l'une des revendications 8 ou 9,
**caractérisé en ce que**
le bâti inférieur est formé, entre autres, de structures (A) absorbant de l'énergie dans le cas d'une collision, et du support (D) qui s'étend obliquement vers l'arrière depuis le plancher (B) et qui porte le dispositif de guidage (V).

11. Siège selon l'une des revendications 8 ou 9,
**caractérisé en ce que** le dispositif de guidage (V) est réalisé de manière que la face d'assise (S) puisse être rabattue sur la face de dossier (L).

12. Siège selon la revendication 2 en fonction d'une des revendications 8 à 11,
**caractérisé en ce que**
les bâtis inférieurs de plusieurs sièges disposés les uns à côtés des autres sont reliés ensemble par des structures, **en ce qu'**une structure est reliée à l'extrémité inférieure des supports (D) et repose sur le sol,
**en ce qu'**une autre structure est reliée à l'extrémité supérieure des supports (D),
**en ce que** la structure inférieure est reliée à des rails de fixation (N) encastrés dans le sol, et **en ce qu'**une structure (A), qui absorbe de l'énergie dans le cas d'une collision, est disposée entre la structure supérieure et les rails de fixation (N).

13. Siège selon l'une des revendications précédentes,
**caractérisé en ce que**
la face d'assise (S) est susceptible d'être basculée vers l'arrière, d'au moins 15°.

14. Siège selon l'une des revendications précédentes,
**caractérisé en ce que**
le dossier est relié rigidement à la face d'assise (S), ou
**en ce que** la face d'assise (S) et le dossier sont reliés ensemble de façon à pouvoir tourner.

15. Siège selon l'une des revendications 2, 8 à 12 ou selon la revendication 13 en fonction d'une des revendications 2, 8 à 12,
**caractérisé en ce que**,
à l'extrémité arrière de la face d'assise (S), sont fixés deux montants (H), et
**en ce qu'**une face de dossier (L) est disposée, pouvant tourner autour d'un axe horizontal, qui présente, depuis l'extrémité supérieure des montants et depuis le centre de la face de dossier (L), chaque fois un éloignement inférieur à 15 cm.

16. Siège selon la revendication 15,
**caractérisé en ce que**
les montants (H) peuvent être inclinés tant vers l'avant que vers l'arrière.

17. Siège selon l'une des revendications précédentes,
**caractérisé en ce que**
le dossier a une dureté qui est différente, selon la position en observant dans la direction verticale.

18. Siège selon la revendication 17,
**caractérisé en ce que**
dans la direction verticale en partant du bas vers le haut est prévue une zone I pour assurer l'appui de la crête iliaque, une zone II pour assurer l'appui de la colonne vertébrale lombaire et une zone III pour assurer l'appui de la partie supérieure du tronc et,
**en ce que** la zone I et la zone II sont plus dures que la zone III.

19. Siège selon la revendication 18,
**caractérisé en ce que**
la zone I est plus dure que la zone II, et
**en ce que** la zone II est plus dure que la face d'assise (S).

20. Siège selon l'une des revendications précédentes,
**caractérisé en ce que**
le rembourrage du dossier ou de la face d'assise (S) est réalisé sous la forme de toile tendue, et
**en ce que** la toile tendue présente une élasticité qui est différente si l'on observe dans la direction de la chaîne et dans la direction de la trame, et est tendue perpendiculairement par rapport à l'axe longitudinal du corps.

21. Siège selon l'une des revendications précédentes,
**caractérisé en ce que**
les dispositifs de réglage des composantes du siège sont formés de dispositifs pour assurer l'actionnement manuel, pour assurer la transmission des déplacements, pour assurer le blocage des articulations et, le cas échéant, d'éléments élastiques pour assurer le déplacement des éléments réglables du siège, et
**en ce que** toujours plusieurs articulations sont bloquées au moyen d'un dispositif servant à l'actionnemen manuel.

22. Siège selon la revendication 21,
**caractérisé en ce que**
tous les éléments réglables sont bloqués uniquement par un dispositif servant à l'actionnement manuel.

23. Siège selon l'une des revendications précédentes,
**caractérisé en ce que**
le repose-pieds (R) est réglable dans les directions verticales et les directions horizontales, et
**en ce que** la capacité de réglage bidimensionnel du repose-pieds (R) est réalisée par le fait que le repose-pieds est relié à un système à levier, qui présente au moins deux articulations de rotation, ou bien qui est relié à deux systèmes à levier, dont chacun au moins présente deux articulations de rotation et dont l'un est relié à l'extrémité gauche du repose-pieds, et l'autre est relié à l'extrémité droite du repose-pieds.

24. Siège selon la revendication 23,
**caractérisé en ce que**
le système à levier ayant au moins deux articulations ou les systèmes à levier ayant au moins deux articulations est ou sont fixés sur la face d'assise (S) et sur le côté de l'utilisateur.

25. Siège selon la revendication 23,
**caractérisé en ce que**,
sur l'articulation de rotation tournée vers la face d'assise (S), est disposé un ressort qui tire à une position de repos, sur ou sous le siège, le repose-pieds, dans le cas où les articulations de rotation ne sont pas bloquées par le dispositif servant au blocage, et
**en ce que**, sur au moins l'une des deux articulations de rotation tournées vers les faces d'assise (S), est disposé un ou chaque fois un ressort, qui tire(nt) le cliquet de pied dans le cas où les articulations de rotation ne sont pas bloquées par le dispositif servant au blocage, pour l'amener à une position de repos sur ou sous le siège.

26. Siège selon la revendication 25,
**caractérisé en ce que**
le ou les leviers tournés vers la face d'assise (S) est ou sont reliés au dispositif servant à l'actionnement manuel, et
**en ce que** le ou les leviers, lors de l'actionnement, poussent le repose-pieds de la position de repos à une position de démarrage dans l'espace réservé aux pieds et situé devant le siège.

27. Siège selon la revendication 26,
**caractérisé en ce que**
le ou les leviers tournés vers le repose-pieds, reposent en une position "réglée pour le repos" sur un appui (W), et
**en ce que** le point de fixation selon la revendication 24, les longueurs des leviers selon la revendication 23, et la position du contre-palier sont dimensionnés de manière que le repose-pieds présente, à la position de démarrage selon la revendication 26, une hauteur de 5 à 10 cm au- dessus du plancher.
